# EUROPEAN PATENT SPECIFICATION

(11) **EP 1 754 748 B1**
(45) Date of publication and mention of the grant of the patent: **29.09.2010**
(21) Application number: 05028627.7
(22) Date of filing: 29.12.2005
(51) Int. Cl.: C08K 5/01, C08K 5/05, C08K 5/07, C08K 5/10, B60C 1/00

(54) **Fragrance-emitting rubber composition for tire**
Duftstoff abgebende Gummizusammensetzung für Reifen
Composition de caoutchouc à diffusion de parfum pour pneus

(30) Priority: 18.08.2005 KR 2005075893
(43) Date of publication of application: 21.02.2007
(73) Proprietor: Kumho Tire Co., Inc., Gwangsan-gu Gwangju 506-711 (KR)
(72) Inventor: Cho, Sun-Ny, Seo-gu Gwangju 502-796 (KR); Park, Je-Hwan, Seo-gu Gwangju 502-154 (KR)
(74) Representative: Schweitzer, Klaus

(56) References cited:
- US-A- 6 033 608
- DATABASE CA [Online] CHEMICAL ABSTRACTS SERVICE, COLUMBUS, OHIO, US; LEE, INN ET AL: "Fragrant tire" XP002365586 retrieved from STN Database accession no. 2005:677188 -& KR 168 608 B1 (KUMHO INDUSTRIAL CO., LTD., S. KOREA) 15 January 1999 (1999-01-15)
- DATABASE CA [Online] CHEMICAL ABSTRACTS SERVICE, COLUMBUS, OHIO, US; TOMITA, TAKAHIRO ET AL: "Rubber compositions for tires without unpleasant rubber odor" XP002365587 retrieved from STN Database accession no. 2004:584708 -& JP 2004 203954 A (SUMITOMO RUBBER INDUSTRIES CO., LTD., JAPAN) 22 July 2004 (2004-07-22)
- DATABASE CA [Online] CHEMICAL ABSTRACTS SERVICE, COLUMBUS, OHIO, US; NICHIZA, MISAO: "Rubber compositions compounded with perfume containing particles and tires using them" XP002365588 retrieved from STN Database accession no. 2002:284691 -& JP 2002 114873 A (YOKOHAMA RUBBER CO., LTD., JAPAN) 16 April 2002 (2002-04-16)

## Description

The present invention relates to a fragrance-emitting rubber composition for tire, and more particularly to a fragrance-emitting rubber composition for a tire, which contains a fragrance in addition to a conventional rubber composition for tire.

Rubber compositions for manufacturing tires contain rubber, sulfur, additive chemicals, etc., which emit bad smells during processes of manufacturing tires and from tire products. Also, tires often smell bad due to heat generated during use thereof.

The smell during tire manufacturing processes can be somewhat improved by diffusing fragrances in the process atmosphere. However, the use of fragrances to improve the smell of tire products has been limited for several reasons. That is, the use of fragrances in tires was unsuitable because it can deteriorate the properties of tires and increase the production cost, and fragrance causes only a subjective difference, having no standard for measurement, and the toxicity to humans has not yet been verified.

Furthermore, current regulations on harmful substances for fragrances stipulate that fragrances be prepared using only raw materials approved for use by the IFA(International Fragrance Administration). Thus, the safety of fragrances with respect to the human body cannot be guaranteed.

As the demand for automobiles increases and the preferences of drivers vary, preferences for tires also vary and the designs and required properties of tires that cause automobiles to look elegant become diverse.

Although design of the prior tires have emphasized visual factors, efforts to impart tires with olfactory properties in addition to visual properties have also been made. As a part of such efforts, there has been an effort to realize the emission of fragrance from tires by adding fragrances to raw material rubber for tires in the manufacturing of tires.

In this case, general fragrances together with fragrance retention agents are added during the manufacturing of tires in order to maintain the fragrance for a long time using the retention agents, because the general fragrances are completely volatilized at a temperature of about 70 °C. However, there is a problem in that the general fragrances or retention agents do not remain after the vulcanization of tires. Examples of the use of such volatile fragrances in the prior art are e.g.:
- DATABASE CA; LEE, INN ET AL: "Fragrant tire" XP002365586 from STN Database accession no. 2005:677188 & KR 168608; or
- DATABASE CA; TOM ITA, TAKAHIRO ET AL: "Rubber compositions for tires without unpleasant rubber odor" XP002365587 from STN Database accession no. 2004:584708 & JP 2004203954; or
- DATABASE CA; NICHIZA, MISAO: "Rubber compositions compounded with perfume containing particles and tires using them" XP002365588 from STN Database accession no. 2002:284691 & JP 2002114873; or
- US-A-6 033 608 (REYNOLDS ET AL).

Accordingly, the present invention as defined in the claims has been made keeping in mind the above problems occurring in the prior art.

When the fragrance-emitting rubber composition according to the present invention is used in a tire tread, which continues to wear in direct contact with the ground surface, the fragrance from the tire tread can be maintained for a long time even in the use of a fragrance which is not as strong as the other components of the tire, owing to the wear of the tire tread. In case of sidewall, the fragrance also can be maintained for a longtime because flexible sidewall builds heats less than the other components.

To achieve the above objects, the present invention provides a fragrance-emitting rubber composition for a tire(tire treads, sidewall and etc.), which comprises a fragrance in an amount of 0.1-20 phr based on 100 phr of raw material rubber.

As the raw material rubber, any rubber may be used in the present invention, as long as it can be used as raw material rubber in the prior rubber compositions for tire.

As one example of the raw material rubber in the present invention, natural rubber may be used alone.

As one example of the raw material rubber in the present invention, each of synthetic rubbers, such as styrene-butadiene rubber, butadiene rubber, isoprene-containing styrene-butadiene rubber, nitrile-containing styrene-butadiene rubber, and neoprene rubber may be used alone. Alternatively, a 1:9-9:1 mixture of two or more of these synthetic rubbers may be used.

As one example of the raw material rubber in the present invention, a 1:9-9:1 mixture of natural rubber and synthetic rubber may be used.

In the inventive fragrance-emitting rubber composition, the fragrance component can be contained in an amount of 0.1-20 phr based on 100 phr of the raw material rubber.

If the fragrance is used in an amount of less than 0.1 phr based on 100 phr of the raw material rubber, the fragrance will not be sufficiently emitted, and if it is used in an amount of more than 20 phr based on 100 phr of the raw material rubber, it can deteriorate the physical properties of the rubber. For this reason, it is preferable that the fragrance be contained in an amount of 0.1-20 phr based on 100 phr of the raw material rubber.

As the fragrance in the present invention, a natural or synthetic fragrance can be used. Preferred is an oil-type fragrance, which maintains more than 90% of its fragrant component even at a temperature of 170-180 °C, which is the temperature for tire processing, as measured by a thermogravimetric analyzer (TGA), and is highly resistant to heat and emits a strong fragrance for a long time.

Examples of the natural fragrance, which can be used in the present invention, include vegetable fragrances and animal fragrances.

The synthetic fragrance can be synthesized from an aromatic component obtained from plant essence, petroleum or coal.

The fragrance used in the present invention may have a specific gravity of 0.5-2.0 at 20 °C and a refractive index of 1.0-2.0 at 20 °C.

The fragrance used in the present invention may comprise any one or more selected from the group consisting of p-methyl acetophenone, cinnamic acid, Ω-bromostyrene, cinnamic acid esters, phenyl glycidate ester, α-alkyl cinnamic aldehyde, cinnamic aldehyde, dihydrocinnamic aldehyde, cinnamic alcohol, cinnamic esters, dihydrocinnamic alcohol, dihydrocinnamic esters, benzal acetone, diphenyl methane, phenyl acetic acid, phenyl acetic acid ester, tonalid, terpineol, terphenyl acetate, methanyl acetate, sandal compounds, isobonyl acetate, dihydro myrcenol, linalool, linalyl ester, linalyl acetate, myrcenol, lyral, nerol, menthol, lonone, methyl lonone, allyl amyl glycolate, tricyclodecenyl acetate, N-hexyl salicylate, and hedione.

In addition to the raw material rubber and fragrance as described above, the inventive rubber composition for tire may, if necessary, contain suitable amounts of various additives used in the prior tire rubber composition, such as reinforcing agents, activating agents, antioxidants, processing oil, vulcanizing agents, and vulcanization accelerators. However, a detailed description of these additives will be omitted herein, because these additives are general components used in the prior tire rubber compositions and are not essential components in the present invention.

In another aspect, the present invention provides a tire comprising the inventive tire rubber composition. The inventive tire is any one selected from the group consisting of automobile tires, truck tires and bus tires.

Hereinafter, the present invention will be described in detail using comparative examples, examples and test examples. It is to be understood, however, that these examples are for illustrative purpose and are not construed to limit the scope of the present invention.

### Example 1

Styrene-butadiene rubber was used as a raw material rubber. 100 phr of the raw material rubber was compounded with 80 phr of carbon black (N330), 3 phr of zinc oxide, 2 phr of stearic acid, 2.75 phr of 2,2,4-trimethyl-1,2-dihydroquinoline as an antioxidant, 2 phr of wax, 15 phr of processing oil and 0.7 phr of a fragrance in a Banbury mixer at 150 °C for 30 minutes.

To the compounded material, 2 phr of sulfur as a vulcanizing agent and 2.3 phr of N-butylbenzothiazole sulfenamide (NS) as a vulcanization accelerator were then added, and the mixture was vulcanized at 160 °C for 20 minutes, thus preparing a fragrance-emitting rubber.

As the fragrance, a fragrance (lavender fragrance) containing linalyl acetate and linalool and having a specific gravity of 0.928-0.948 at 20 °C and a refractive index of 1.443-1.463 at 20 °C was used.

### Example 2

A fragrance-emitting rubber was prepared in the same manner as in Example 1, except that the fragrance was used in an amount of 5 phr.

### Comparative Example

A rubber was prepared in the same manner as in Example 1, except that the fragrance was not used.

**Table 1: Composition of Examples and Comparative Example**

| Components | Example 1 | Example 2 | Comparative Example |
|---|---|---|---|
| Raw material rubber | 100 | 100 | 100 |
| Carbon black | 80 | 80 | 80 |
| Zinc oxide | 3.0 | 3.0 | 3.0 |
| Stearic acid | 2.0 | 2.0 | 2.0 |
| Antioxidant | 2.75 | 2.75 | 2.75 |
| Wax | 2.0 | 2.0 | 2.0 |
| Processing oil | 15 | 15 | 15 |
| Fragrance | 0.7 | 5.0 | - |
| Sulfur | 2.0 | 2.0 | 2.0 |
| Vulcanizing accelerator | 2.3 | 2.3 | 2.3 |

### Test example 1

The rubbers prepared in Examples 1 and 2 and Comparative Example was measured for their physical properties according to relevant ASTM standards, and the results are shown in Table 2 below.

**Table 2: Measurement results for physical properties**

| Test items | | Example 1 | Example 2 | Comparative Example |
|---|---|---|---|---|
| Specific gravity | SG | 1.16 | 1.18 | 1.16 |
| RHEO (160 °C) | TOQ (Max) | 29.2 | 30.4 | 30.7 |
| | T40 | 6.01 | 5.34 | 6.55 |
| | T90 | 8.54 | 8.28 | 9.35 |
| | EC (end cure) | 9.39 | 9.46 | 10.29 |
| ML (125 °C) | Viscosity | 48.5 | 58 | 49.4 |
| | T05 | 24.8 | 20.53 | 27.2 |
| Tensile properties | Hardness | 67 | 67 | 68 |
| | 300% modulus | 140 | 132 | 144 |
| | Tensile strength | 199 | 183 | 203 |
| | Elongation | 408 | 402 | 404 |
| DIN wear | (g) | 0.115 | 0.114 | 0.113 |
| PICO wear | (g) | 0.0175 | 0.0173 | 0.0185 |
| F.T.F. | (cycles) | 70300 | 73700 | 77620 |
| DMPC (7,000 | Width (mm) | 10.3 | 9.9 | 10.1 |
| Cycles) | Length (mm) | 7.4 | 6.2 | 6 |

### Test Example 2

Whether each of the rubbers prepared in Examples 1 and 2 and Comparative Example emitted fragrance was measured, and the results are shown in Table 3 below.

For this purpose, sensory panels comprising 20 peole(10 men and 10 women) were made to smell each of the rubbers, and the results are shown in Table 3.

**Table 3: Measurement of fragrance**

| Item | Example 1 | Example 2 | Comparative Example |
|---|---|---|---|
| Smell | Weak emission of fragrant smell | Strong Emission of fragrant smell | General rubber smell |

As can be seen from the results of Test Example 1, the fragrance-emitting rubbers of Examples 1 and 2 according to the present invention are equal or better in physical properties than those of the Comparative Example consisting of the general rubber composition. Also, as can be seen from the results of Test Example 2, the fragrance-emitting rubbers of Examples 1 and 2 emit fragrance without smelling like rubber, whereas the rubber of Comparative Example has only the general rubber smell.

Namely, it will be known that the inventive rubber containing the fragrance emits a particular fragrance depending on the components of the fragrance.

## Claims

1. A fragrance-emitting rubber composition for tire, comprising a fragrance in an amount of 0.1-20 phr based on 100 phr of a raw material rubber, wherein the fragrance has a specific gravity of 0.5-2.0 at 20 °C and a refractive index of 0.1-2.0 at 20 °Cand is an oil-type fragrance which maintains more than 90% of its fragrant component even at temperatures of 170-180 °C, which is the temperature for tire processing, as measured by thermogravimetric analyzer (TGA), and wherein the fragrance comprises at least one compound selected from the group consisting of p-methyl acetophenone, cinnamic acid, Ω-bromostyrene, cinnamic acid esters, phenyl glycidate ester, α-alkyl cinnamic aldehyde, cinnamic aldehyde, dihydrocinnamic aldehyde, cinnamic alcohol, cinnamic esters, dihydrocinnamic alcohol, dihydrocinnamic esters, benzal acetone, diphenyl methane, phenyl acetic acid, phenyl acetic acid ester, tonalid, terpineol, terphenyl acetate, methanyl acetate, sandal compounds, isobonyl acetate, dihydro myrcenol, linalool, linalyl ester, linalyl acetate, myrcenol, lyral, nerol, menthol, lonone, methyl lonone, allyl amyl glycolate, tricyclodecenyl acetate, N-hexyl salicylate, and hedione

2. A tire comprising a fragrance-emitting rubber composition as set forth in Claim 1.

3. The tire according to Claim 2, wherein the rubber composition is contained in the tire treads.

4. The tire according to Claim 2 or 3, wherein the rubber composition is contained in the tire sidewall.

## Patentansprüche

1. Eine Duftstoff abgebende Gummizusammensetzung für Reifen, umfassend einen Duftstoff in einer Menge von 0,1-20 phr basierend auf 100 phr eines Rohstoffgummis, worin der Duftstoff eine spezifische Dichte von 0,5-2,0 bei 20°C und einen Brechungsindex von 0,1-2,0 bei 20°C aufweist, und ein ölartiger Duftstoff ist, welcher mehr als 90% seines duftenden Bestandteils sogar bei Temperaturen von 170-180°C, welches die Temperatur zur Reifenverarbeitung ist, beibehält, gemessen mittels eines thermogravimetrischen Analysators (TGA), und worin der Duftstoff mindestens eine Zusammensetzung ausgewählt aus der Gruppe bestehend aus p-Methyl Acetophenon, Zimtsäure, Ω-Bromstyrol, Zimtsäureestern, Phenylglycidylester, α-Alkylzimtaldehyd, Zimtaldehyd, Dihydrozimtaldehyd, Zimtalkohol, Zimtsäureestern, Dihydrozimtalkohol, Dihydrozimtsäureestern, Benzalaceton, Diphenylmethan, Phenylessigsäure, Phenylessigsäureester, Tonalid, Terpineol, Terphenylacetat, Methanylacetat, Sandelholzverbindungen, Isobornylacetat, Dihydromyrcenol, Linalool, Linalylester, Linalylacetat, Myrcenol, Lyral, Nerol, Menthol, lonon, Menthylionon, Allylamylglykolat, Tricyclodecenylacetat, N-Hexylsalicylat und Hedion umfasst.

2. Ein Reifen, umfassend eine Duftstoff abgebende Gummizusammensetzung wie in Anspruch 1 dargelegt.

3. Der Reifen nach Anspruch 2, worin die Gummizusammensetzung in den Reifenlaufflächen enthalten ist.

4. Der Reifen nach Anspruch 2 oder 3, worin die Gummizusammensetzung in der Reifenflanke enthalten ist.

## Revendications

1. Composition de caoutchouc émettant une fragrance pour pneumatique, comprenant une fragrance en quantité de 0,1 à 20 phr sur la base de 100 phr d'un caoutchouc de matériau brut, dans laquelle la fragrance a une densité relative de 0,5 à 2,0 à 20 °C et un indice de réfraction de 0,1 à 2,0 à 20 °C, et représente une fragrance de type huile qui conserve plus de 90 % de son composant de fragrance même à des températures de 170 à 180 °C, c'est-à-dire la température employée pour le traitement des pneus, comme mesuré avec l'analyseur thermo-gravimétrique (TGA), et dans laquelle la fragrance comprend au moins un composé sélectionné dans le groupe constitué de la p-méthylacétophénone, de l'acide cinnamique, du Ω-bromostyrène, d'esters de l'acide cinnamique, d'ester de phénylglycidate, de l'aldéhyde α-alkyl-cinnamique, de l'aldéhyde cinnamique, de l'aldéhyde dihydrocinnamique, de l'alcool cinnamique, d'esters cinnamiques, de l'alcool dihydrocinnamique, d'esters dihydrocinnamiques, du benzal-acétone, du diphénylméthane, de l'acide phénylacétique, d'ester de l'acide phénylacétique, du tonalide, du terpinéol, de l'acétate de terphényle, de l'acétate de méthanyle, de composés de santal, de l'acétate d'isobonyle, du dihydromyrcénol, du linalool, de l'ester de linalyle, de l'acétate de linalyle, du myrcénol, du lyral, du nérol, du menthol, de l'ionone, de la méthyl-ionone, du glycolate d'allylamyle, de l'acétate de tricyclodécényle, du salicilate de N-héxyle et de l'hédione.

2. Pneumatique comprenant une composition de caoutchouc émettant une fragrance selon la revendication 1.

3. Pneumatique selon la revendication 2, dans lequel la composition de caoutchouc est contenue dans les chapes du pneu.

4. Pneumatique selon la revendication 2 ou 3, dans lequel la composition de caoutchouc est contenue dans la paroi latérale du pneu.
